# FASCICULE DE BREVET EUROPEEN

(11) **EP 2 468 646 B1**
(45) Date de publication et mention de la délivrance du brevet: **17.09.2014**
(21) Numéro de dépôt: 11194989.7
(22) Date de dépôt: 21.12.2011
(51) Int. Cl.: B65D 1/40

(54) **Contenant décoré obtenu par moulage et son moule de fabrication**
Durch Formguss erzeugtes Ziergehäuse, und Gussform für seine Herstellung
Decorated container obtained by moulding and mould for manufacturing same

(30) Priorité: 21.12.2010 FR 1060938
(43) Date de publication de la demande: 27.06.2012
(73) Titulaire: Cep Tubes, 63550 Saint Remy Sur Durolle (FR)
(72) Inventeur: Dambricourt, Géry, 63300 ESCOUTOUX (FR)
(74) Mandataire: Novagraaf Technologies

(56) Documents cités:
- FR-A- 1 304 951
- US-A1- 2006 076 395

## Description

L'invention concerne, de façon générale, les techniques de moulage.

Plus précisément, l'invention concerne, selon un premier de ses aspects, un contenant moulé par injection en polymère thermoplastique, présentant un fond s'étendant dans un plan principal et une paroi dressée de forme évasée se raccordant au fond et s'étendant sur une hauteur déterminée jusqu'à un bord continu distant du fond, cette paroi formant, sur au moins 75% de sa hauteur, un angle au moins égal à 5 degrés avec une normale au plan principal du fond.

Les contenants de ce type sont bien connus de l'homme du métier et comprennent notamment les contenants à destination horticole couramment utilisés en raison de leur fabrication aisée et de leur coût de revient corrélativement faible.

US 2006/0076395 divulgue un contenant qui présente une surface granitée, selon le préambule de la revendication 1, et un moule correspondant au préambule de la revendication 5.

En dépit de leurs avantages, les contenants connus de ce type présentent évidemment des qualités esthétiques et ornementales inférieures à celles des poteries fabriquées à la main.

Bien que ces dernières soient en effet très difficiles à imiter dans le cadre d'une fabrication en grande série, l'invention a pour but de proposer une technique permettant au moins d'enrichir considérablement les qualités décoratives des contenants moulés en polymère.

A cette fin, un contenant réalisé selon l'invention et par ailleurs conforme à la définition générique qu'en donne le préambule ci-dessus, est essentiellement caractérisé en ce que la paroi présente, sur une partie au moins de sa face externe, un décor en relief granité d'épaisseur moyenne sensiblement constante et contigu à une plage exempte de décor, ce décor couvrant au moins une zone topologiquement convexe de surface au moins égale 100 millimètres carrés, dans laquelle ce décor présente une modulation d'épaisseur au moins égale à 0,12 millimètres, caractérisé en ce que le décor en relief granité présente au moins un point culminant qui est surélevé, par rapport à la plage exempte de décor, d'une hauteur au moins égale à 0,25 millimètres.

Par "relief granité", on entend ici un relief ayant l'aspect d'un ensemble de grains, cette expression n'impliquant cependant pas que ces grains soient réguliers, ni qu'ils soient faciles à distinguer les uns des autres à l'oeil nu.

Par "zone topologiquement convexe", on entend ici toute portion de la surface du décor qui, si elle contient deux extrémités d'un segment de droite ou d'un arc de cercle de rayon supérieur au diamètre de la zone, contient l'intégralité de ce segment de droite ou de cet arc de cercle.

Par "modulation d'épaisseur", on entend ici la plus grande différence de hauteur observable entre deux points du relief granité supposé être développé à plat, le premier point étant choisi au sommet d'un des grains les plus saillants de ce relief, et le second point étant choisi dans l'un des creux les plus profonds de ce relief.

Dans un mode de réalisation préféré, le décor présente, dans ladite zone topologiquement convexe, une modulation d'épaisseur au moins égale à 0,20 millimètres.

Pour un rendu optimal, il est judicieux de prévoir que le décor occupe au moins 8% de la surface visible de la face externe de la paroi de ce contenant.

Par "surface visible de la face externe" du contenant, on entend ici l'intégralité de la surface de cette paroi externe, offerte à l'oeil d'un observateur qui l'examine sur tout son pourtour en restant dans un plan transversal à la normale au fond de ce contenant et situé à mi-hauteur de cette paroi.

Un tel contenant peut adéquatement être réalisé en un polymère teinté dans la masse et contenant du polypropylène en tant que constituant d'un mélange ou en tant que copolymère.

L'invention concerne également un moule pour la fabrication d'un contenant en polymère thermoplastique présentant un fond s'étendant dans un plan principal et une paroi dressée de forme évasée se raccordant au fond et s'étendant sur une hauteur déterminée jusqu'à un bord continu distant du fond, cette paroi formant, sur au moins 75 pourcent de sa hauteur, un angle au moins égal à 5 degrés avec une normale au plan principal du fond, ce moule comprenant un noyau définissant la forme de la face interne de la paroi du contenant et une empreinte définissant la forme de la face externe de la paroi et comportant un fond s'étendant dans un plan principal et moulant le fond du contenant, et ce moule étant caractérisé en ce que l'empreinte présente au moins localement une cavité en contre-dépouille de profondeur moyenne sensiblement constante et présentant un fond à surface granitée, cette cavité couvrant au moins une zone topologiquement convexe de surface au moins égale à 100 millimètres carrés, dans laquelle le fond à surface granitée présente une modulation de profondeur au moins égale à 0,12 millimètres, caractérisé en ce que le fond à surface granitée de la cavité en contre-dépouille présente au moins un point enfoncé dans cette cavité à une profondeur dont la valeur est au moins égale à 0,25 millimètres.

Par "modulation de profondeur", on entend ici la plus grande différence de profondeur observable entre deux points du fond à surface granitée supposé être développé à plat, le premier point étant choisi au sommet d'un des grains les plus saillants de la surface granitée, et le second point étant choisi dans l'un des creux les plus profonds de cette surface granitée.

Dans un mode de réalisation préféré, le fond à surface granitée présente, dans ladite zone topologiquement convexe, une modulation de profondeur au moins égale à 0,20 millimètres.

Dans le cas typique où l'empreinte au moins est réalisée en acier, la surface granitée du fond de la cavité est de préférence réalisée par attaque chimique, ou, à défaut, par électroérosion.

Dans un mode de réalisation industriellement fiable, l'empreinte est de préférence réalisée en acier trempé présentant une dureté d'au moins 34 Rockwell C.

La cavité en contre-dépouille permettant le moulage d'un décor présente au moins une bordure inférieure et une bordure supérieure respectivement plus proche et plus éloignée du fond de l'empreinte, la bordure supérieure de cette cavité pouvant avantageusement être formée par une arête au moins localement émoussée par polissage à l'endroit, ou à l'un des endroits, où elle forme un angle égal ou supérieur à 45 degrés avec la normale au plan principal du fond de l'empreinte.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique en élévation d'un exemple de contenant réalisé suivant l'invention;
- la figure 2 est une vue schématique en coupe d'un exemple de moule conforme à l'invention; et
- la figure 3 illustre à échelle agrandie le détail repéré par la référence III de la figure 2.

Comme annoncé précédemment, l'invention concerne notamment un contenant 1 moulé par injection en polymère thermoplastique, par exemple réalisé en un polymère teinté dans la masse et contenant du polypropylène en tant que constituant d'un mélange ou en tant que copolymère.

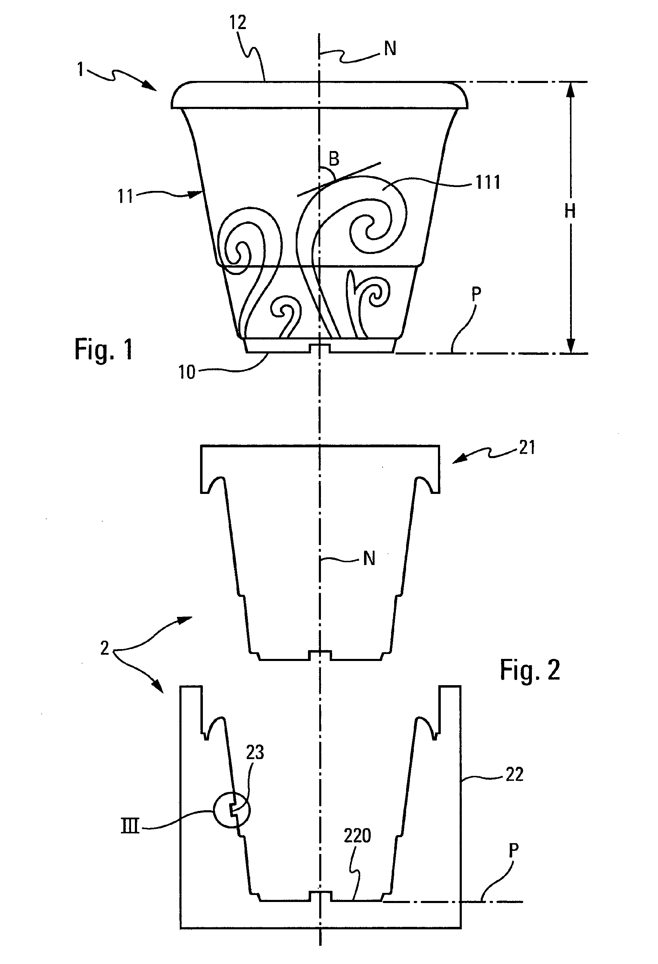

Comme le montre la figure 1, un tel contenant présente essentiellement un fond 10 s'étendant dans un plan principal P, et une paroi dressée 11 de forme évasée se raccordant au fond 10.

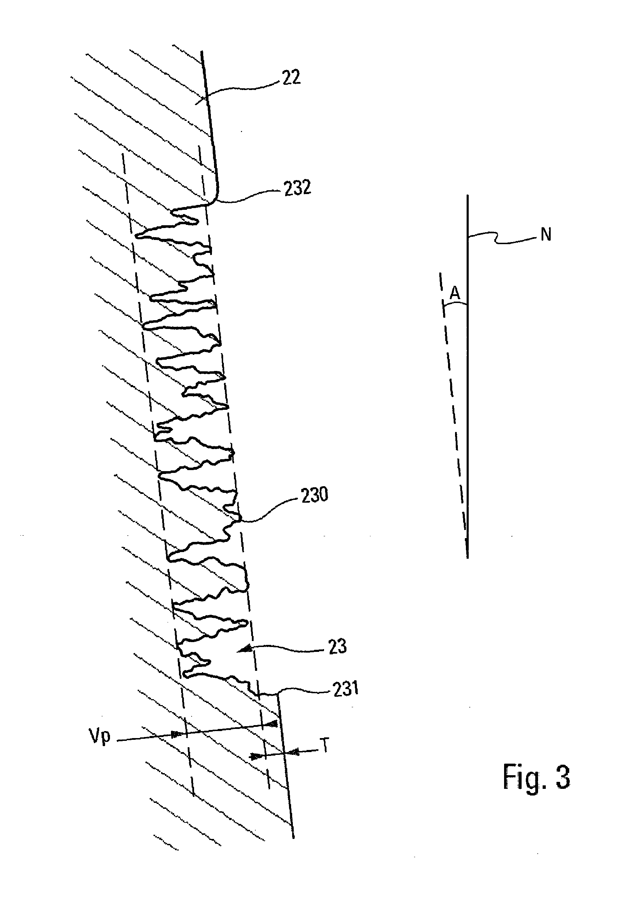

La paroi 11 s'étend, sur une hauteur H typiquement au moins égale à 10 centimètres, jusqu'à un bord continu 12 distant du fond 10, et forme, sur au moins 75% de sa hauteur H, un angle A au moins égal à 5 degrés avec la normale N au plan principal P du fond 10, l'angle A étant visible sur la figure 3 qui représente partiellement le moule 2 de ce contenant.

Alors que l'invention est difficilement mise en oeuvre sur des contenants dont l'angle A est sensiblement inférieur à 5 degrés, elle est en revanche applicable aux contenants dont l'angle A est au moins égal à 5 degrés, et, a fortiori, notamment aux contenants dont l'angle A est de l'ordre de 7 degrés ou plus de 7 degrés.

Selon l'invention, la paroi 11 de ce contenant présente, sur une partie au moins de sa face externe, un décor 111 en relief granité d'épaisseur moyenne sensiblement constante et contigu à une plage exempte de décor.

En outre, le décor couvre au moins une zone topologiquement convexe dont la surface est au moins égale à 100 millimètres carrés, et dans laquelle ce décor présente une modulation d'épaisseur dont l'amplitude est au moins égale à 0,12 millimètres.

Ces caractéristiques ont pour effet d'une part de permettre le démoulage du contenant sans destruction du décor, et d'autre part de conférer au contenant un aspect visuel très flatteur en raison du contraste entre le décor et la plage contiguë exempte de décor.

Il convient ici de préciser que, si le décor doit comprendre au moins une zone topologiquement convexe ayant cette surface minimale de 100 millimètres carrés, il n'est en revanche pas du tout nécessaire que le décor 111 soit topologiquement convexe dans son intégralité.

En particulier, le décor peut être constitué par des éléments de décor séparés les uns des autres, et / ou un élément de décor peut inclure une plage exempte de décor.

En outre, l'expression "plage exempte de décor" s'entend ici comme toute plage de la face externe de la paroi 11 qui ne comprend pas de décor tel que spécifiquement défini précédemment, ce qui n'implique pas que la plage exempte de décor, ou l'ensemble des plages exemptes de décor, doivent nécessairement présenter un aspect homogène.

Le contraste précédemment évoqué peut être encore renforcé en prévoyant qu'une plage exempte de décor contiguë à un élément de décor présente un état de surface poli glace.

En outre, le décor 111 occupe de préférence au moins 8% de la surface visible de la face externe de la paroi 11 de ce contenant.

L'invention concerne également un moule permettant de fabriquer un contenant tel que précédemment défini.

Comme le montre la figure 2, ce moule comprend de façon connue en soi un noyau 21 dont la surface extérieure définit la forme de la face interne du fond 10 et de la paroi 11 du contenant 1, et une empreinte 22 dont la surface intérieure définit la forme de la face externe du fond 10 et de la paroi 11.

Pour ce faire, l'empreinte 22 comporte donc un fond 220 qui correspond au fond 10 du contenant et qui peut ainsi être considéré comme s'étendant dans le même plan principal P que le fond 10 du contenant 1 lors du moulage de ce contenant et présentant donc la même normale N.

Selon l'invention, l'empreinte 22 présente au moins localement (figure 3) une cavité 23 en contre-dépouille de profondeur moyenne sensiblement constante et présentant un fond 230 à surface granitée.

La cavité 23 couvre au moins une zone topologiquement convexe de surface au moins égale à 100 millimètres carrés, dans laquelle le fond 230 à surface granitée présente une modulation de profondeur Vp au moins égale à 0,12 millimètres.

Un moule ainsi conçu permet de mouler un contenant décoré tel que précédemment défini sans requérir que l'empreinte 22 comporte une ou plusieurs pièces mobiles suivant une direction transversale à la normale N au fond.

De façon plus avantageuse, la modulation de profondeur Vp du fond 230 de la cavité 23 dans la zone topologiquement convexe peut atteindre ou dépasser 0,20 millimètres.

Dans ce cas, le décor 111 présente corrélativement une modulation d'épaisseur au moins égale à 0,20 millimètres dans cette zone topologiquement convexe.

Par ailleurs, il est judicieux de prévoir que le fond 230 à surface granitée de la cavité 23 en contre-dépouille présente au moins un point enfoncé dans la cavité 23 à une profondeur dont la valeur est au moins égale à 0,25 millimètres et correspond à la somme de la modulation de profondeur Vp et d'une valeur minimale T d'enfoncement.

Corrélativement, le décor 111 en relief granité présente donc au moins un point culminant qui est surélevé, par rapport à toute plage contiguë exempte de décor, d'une hauteur au moins égale à 0,25 millimètres.

Enfin, lorsque l'angle A est de l'ordre de 7 degrés, le fond 230 présente au moins un point enfoncé à une profondeur au moins égale à 0,30 millimètres.

Corrélativement, le décor 111 présente au moins un point culminant surélevé d'une hauteur au moins égale à 0,30 millimètres.

Le moule 2, ou au moins l'empreinte 22, est de préférence réalisé en acier trempé présentant une dureté d'au moins 34 Rockwell C.

Par ailleurs, bien que la surface granitée du fond 230 de la cavité ou chaque cavité 23 puisse être réalisée par électroérosion, elle est de préférence réalisée par attaque chimique.

Comme le montre encore la figure 3, la cavité ou chaque cavité 23 présente au moins une bordure inférieure 231 et une bordure supérieure 232, ces bordures inférieure et supérieure étant respectivement plus proche et plus éloignée du fond 220 de l'empreinte 22.

Dans le cas où, comme illustré à la figure 1, la bordure supérieure 232 d'une cavité 23 forme au moins localement un angle B supérieur ou égal à 45 degrés avec la normale N au plan principal P du fond 220 de l'empreinte 22, l'arête qui forme cette bordure supérieure 232 est de préférence au moins localement émoussée par polissage.

Cette caractéristique permet notamment l'obtention de décors 111 exempts de défauts, ce résultat étant particulièrement difficile à obtenir dans le cas où le contenant est réalisé dans un polymère à base de polypropylène.

## Revendications

1. Contenant (1) moulé en polymère thermoplastique, présentant un fond (10) s'étendant dans un plan principal (P) et une paroi dressée (11) de forme évasée se raccordant au fond (10) et s'étendant sur une hauteur (H) déterminée jusqu'à un bord continu (12) distant du fond (10), cette paroi (11) formant, sur au moins 75% de sa hauteur (H), un angle (A) au moins égal à 5 degrés avec une normale (N) au plan principal (P) du fond (10), la paroi (11) présentant, sur une partie au moins de sa face externe, un décor (111) en relief granité d'épaisseur moyenne sensiblement constante et contigu à une plage exempte de décor, ce décor couvrant au moins une zone topologiquement convexe de surface au moins égale à 100 millimètres carrés, dans laquelle ce décor présente une modulation d'épaisseur au moins égale à 0,12 millimètres,
**caractérisé en ce que** le décor (111) en relief granité présente au moins un point culminant qui est surélevé, par rapport à la plage exempte de décor, d'une hauteur au moins égale à 0,25 millimètres.

2. Contenant suivant la revendication 1, **caractérisé en ce que** le décor (111) présente, dans ladite zone topologiquement convexe, une modulation d'épaisseur au moins égale à 0,20 millimètres.

3. Contenant suivant l'une quelconque des revendications précédentes, **caractérisé en ce que** le décor (111) occupe au moins 8% de la surface visible de la face externe de la paroi (11) de ce contenant.

4. Contenant suivant l'une quelconque des revendications précédentes, **caractérisé en ce qu'**il est réalisé en un polymère teinté dans la masse et contenant du polypropylène en tant que constituant d'un mélange ou en tant que copolymère.

5. Moule (2) pour la fabrication d'un contenant (1) en polymère thermoplastique présentant un fond (10) s'étendant dans un plan principal (P) et une paroi dressée (11) de forme évasée se raccordant au fond (10) et s'étendant sur une hauteur déterminée (H) jusqu'à un bord continu (12) distant du fond (10), cette paroi (11) formant, sur au moins 75% de sa hauteur, un angle (A) au moins égal à 5 degrés avec une normale (N) au plan principal (P) du fond (10), ce moule (2) comprenant un noyau (21) définissant la forme de la face interne de la paroi (11) du contenant (1) et une empreinte (22) définissant la forme de la face externe de la paroi (11) et comportant un fond (220) s'étendant dans un plan principal (P) et moulant le fond (10) du contenant (1), l'empreinte (22) présentant au moins localement une cavité (23) en contre-dépouille de profondeur moyenne sensiblement constante et présentant un fond (230) à surface granitée, cette cavité (23) couvrant au moins une zone topologiquement convexe de surface au moins égale à 100 millimètres carrés, dans laquelle le fond (230) à surface granitée présente une modulation de profondeur (Vp) au moins égale à 0,12 millimètres,
**caractérisé en ce que** le fond (230) à surface granitée de la cavité (23) en contre-dépouille présente au moins un point enfoncé dans cette cavité à une profondeur dont la valeur (T+Vp) est au moins égale à 0,25 millimètres.

6. Moule suivant la revendication 5, **caractérisé en ce que** le fond (230) à surface granitée présente, dans ladite zone topologiquement convexe, une modulation de profondeur (Vp) au moins égale à 0,20 millimètres.

7. Moule suivant l'une quelconque des revendications 5 à 6, **caractérisé en ce que** l'empreinte (22) au moins est réalisée en acier et **en ce que** la surface granitée du fond (230) de la cavité (23) est réalisée par attaque chimique.

8. Moule suivant l'une quelconque des revendications 5 à 7, **caractérisé en ce que** l'empreinte (22) au moins est réalisée en acier trempé présentant une dureté d'au moins 34 Rockwell C.

9. Moule suivant l'une quelconque des revendications 5 à 8, **caractérisé en ce que** la cavité (23) présente au moins une bordure (231) dite inférieure et une bordure (232) dite supérieure, lesdites bordures inférieure et supérieure (231, 232) étant respectivement plus proche et plus éloignée du fond (220) de l'empreinte (22), **en ce que** la bordure supérieure (232) forme au moins localement, avec une normale (N) au plan principal (P) du fond (220) de l'empreinte (22), un angle (B) au moins égal à 45 degrés, et **en ce que** la bordure supérieure (232) est formée par une arête au moins localement émoussée par polissage.

## Patentansprüche

1. Aus thermoplastischem Polymer gegossener Behälter (1), welcher einen Boden (10), der sich in einer Hauptebene (P) erstreckt, und eine aufrechte Wand (11) mit einer sich aufweitenden Form, die sich an den Boden (10) anschließt und sich über eine bestimmte Höhe (H) bis zu einem von dem Boden (10) entfernten durchgehenden Rand (12) erstreckt, aufweist, wobei diese Wand (11) auf mindestens 75 % ihrer Höhe (H) einen Winkel (A) von mindestens 5 Grad mit einer Senkrechten (N) zu der Hauptebene (P) des Bodens (10) bildet, wobei die Wand (11) wenigstens auf einem Teil ihrer Außenfläche einen Dekor (111) aus körnigem Relief mit einer im Wesentlichen konstanten mittleren Dicke aufweist, der an einen Bereich ohne Dekor angrenzt, wobei dieser Dekor mindestens einen topologisch konvexen Bereich mit einer Fläche von mindestens 100 Quadratmillimetern bedeckt, in welchem dieser Dekor eine Dickenmodulation aufweist, die mindestens 0,12 Millimeter beträgt,
**dadurch gekennzeichnet, dass** der Dekor (111) aus körnigem Relief mindestens einen höchsten Punkt aufweist, der bezüglich des Bereichs ohne Dekor um eine Höhe überhöht ist, die mindestens 0,25 Millimeter beträgt.

2. Behälter nach Anspruch 1, **dadurch gekennzeichnet, dass** der Dekor (111) in dem topologisch konvexen Bereich eine Dickenmodulation aufweist, die mindestens 0,20 Millimeter beträgt.

3. Behälter nach einem der vorhergehenden Ansprüche, **dadurch gekennzeichnet, dass** der Dekor (111) mindestens 8 % der sichtbaren Oberfläche der Außenseite der Wand (11) dieses Behälters einnimmt.

4. Behälter nach einem der vorhergehenden Ansprüche, **dadurch gekennzeichnet, dass** er aus einem eingefärbten Polymer hergestellt ist, das Polypropylen als Bestandteil einer Mischung oder als Copolymer enthält.

5. Gussform (2) zur Herstellung eines Behälters (1) aus thermoplastischem Polymer, welcher einen Boden (10), der sich in einer Hauptebene (P) erstreckt, und eine aufrechte Wand (11) mit einer sich aufweitenden Form, die sich an den Boden (10) anschließt und sich über eine bestimmte Höhe (H) bis zu einem von dem Boden (10) entfernten durchgehenden Rand (12) erstreckt, aufweist, wobei diese Wand (11) auf mindestens 75 % ihrer Höhe (H) einen Winkel (A) von mindestens 5 Grad mit einer Senkrechten (N) zu der Hauptebene (P) des Bodens (10) bildet, wobei diese Gussform (2) einen Kern (21) umfasst, der die Form der Innenseite der Wand (11) des Behälters (1) definiert, und ein Formnest (22), das die Form der Außenseite der Wand (11) definiert und einen Boden (220) aufweist, der sich in einer Hauptebene (P) erstreckt und den Boden (10) des Behälters (1) formt, wobei das Formnest (22) wenigstens lokal einen hinterschnittenen Hohlraum (23) mit einer im Wesentlichen konstanten mittleren Tiefe aufweist, der einen Boden (230) mit körniger Oberfläche aufweist, wobei dieser Hohlraum (23) mindestens einen topologisch konvexen Bereich mit einer Fläche von mindestens 100 Quadratmillimetern bedeckt, in welchem der Boden (230) mit körniger Oberfläche eine Tiefenmodulation (Vp) aufweist, die mindestens 0,12 Millimeter beträgt,
**dadurch gekennzeichnet, dass** der Boden (230) mit körniger Oberfläche des hinterschnittenen Hohlraums (23) mindestens einen in diesen Hohlraum abgesenkten Punkt mit einer Tiefe aufweist, deren Wert (T+Vp) mindestens 0,25 Millimeter beträgt.

6. Gussform nach Anspruch 5, **dadurch gekennzeichnet, dass** der Boden (230) mit körniger Oberfläche in dem topologisch konvexen Bereich eine Tiefenmodulation (Vp) aufweist, die mindestens 0,20 Millimeter beträgt.

7. Gussform nach einem der Ansprüche 5 bis 6, **dadurch gekennzeichnet, dass** wenigstens das Formnest (22) aus Stahl hergestellt ist, und dadurch, dass die körnige Oberfläche des Bodens (230) des Hohlraums (23) durch Ätzung hergestellt ist.

8. Gussform nach einem der Ansprüche 5 bis 7, **dadurch gekennzeichnet, dass** wenigstens das Formnest (22) aus gehärtetem Stahl hergestellt ist, der eine Rockwell-C-Härte von mindestens 34 aufweist.

9. Gussform nach einem der Ansprüche 5 bis 8, **dadurch gekennzeichnet, dass** der Hohlraum (23) mindestens einen sogenannten unteren Rand (231) und einen sogenannten oberen Rand (232) aufweist, wobei der untere Rand (231) dem Boden (220) des Formnestes (22) näher ist und der obere Rand (232) weiter von diesem entfernt ist, dadurch, dass der obere Rand (232) wenigstens lokal mit einer Senkrechten (N) zu der Hauptebene (P) des Bodens (220) des Formnestes (22) einen Winkel (B) von mindestens 45 Grad bildet, und dadurch, dass der obere Rand (232) von einer Kante gebildet wird, die wenigstens lokal durch Polieren abgestumpft worden ist.

## Claims

1. Container (1) moulded in thermoplastic polymer, having a bottom (10) extending in a main plane (P) and a standing-up wall (11) of flared shape connecting to the bottom (10) and extending over a determined height (H) as far as a continuous edge (12) distant from the bottom (10), this wall (11) forming, over at least 75% of its height (H), an angle (A) at least equal to 5 degrees with a normal (N) to the main plane (P) of the bottom (10), the wall (11) having, over at least part of its external face, a stippled raised decoration (111) of substantially constant mean thickness and contiguous with a decoration-free region, this decoration covering at least one topologically convex zone with a surface area at least equal to 100 square millimetres, in which zone this decoration has a thickness modulation at least equal to 0.12 millimetres,
**characterized in that** the stippled raised decoration (111) has at least one culminating point which is raised up, with respect to the decoration-free region, by a height at least equal to 0.25 millimetres.

2. Container according to Claim 1, **characterized in that** the decoration (111) has, in the said topologically convex zone, a thickness modulation at least equal to 0.20 millimetres.

3. Container according to any one of the preceding claims, **characterized in that** the decoration (111) occupies at least 8% of the visible surface area of the external face of the wall (11) of this container.

4. Container according to any one of the preceding claims, **characterized in that** it is made of a polymer dyed in the mass and containing polypropylene as an ingredient of a mixture or as a copolymer.

5. Mould (2) for manufacturing a container (1) in thermoplastic polymer having a bottom (10) extending in a main plane (P) and a standing-up wall (11) of flared shape connecting to the bottom (10) and extending over a determined height (H) as far as a continuous edge (12) distant from the bottom (10), this wall (11) forming, over at least 75% of its height (H), an angle (A) at least equal to 5 degrees with a normal (N) to the main plane (P) of the bottom (10), this mould (2) comprising a core (21) defining the shape of the internal face of the wall (11) of the container (1) and an impression (22) defining the shape of the external face of the wall (11) and comprising a bottom (220) extending in a main plane (P) and moulding the bottom (10) of the container (1), the impression (22) having at least locally a cavity (23) with an undercut of a substantially constant mean depth and having a bottom (230) with a stippled surface, this cavity (23) covering at least a topologically convex zone with a surface area at least equal to 100 square millimetres, in which the bottom (230) with a stippled surface has a depth modulation (Vp) at least equal to 0.12 millimetres,
**characterized in that** the stippled bottom (230) of the undercut cavity (23) has at least one point protruding into this cavity at a depth of which the value (T+Vp) is at least equal to 0.25 millimetres.

6. Mould according to Claim 5, **characterized in that** the stippled bottom (230) has, in the said topologically convex zone, a depth modulation (Vp) at least equal to 0.20 millimetres.

7. Mould according to either one of Claims 5 and 6, **characterized in that** the impression (22) at least is made of steel and **in that** the stippled surface of the bottom (230) of the cavity (23) is achieved by chemical attack.

8. Mould according to any one of Claims 5 to 7, **characterized in that** the impression (22) at least is made of hardened steel with a hardness of at least 34 Rockwell C.

9. Mould according to any one of Claims 5 to 8, **characterized in that** the cavity (23) has at least one edging (231) referred to as the lower edging and one edging (232) referred to as the upper edging, the said lower and upper edgings (231, 232) being respectively closer to and further away from the bottom (220) of the impression (22), **in that** the upper edging (232) forms, at least locally, with a normal (N) to the main plane (P) of the bottom (220) of the impression (22), an angle (B) at least equal to 45 degrees, and **in that** the upper edging (232) is formed of an edge corner which is at least locally blunted by polishing.
